# EUROPEAN PATENT APPLICATION

(11) **EP 2 608 141 A2**
(43) Date of publication of application: **26.06.2013**
(21) Application number: 11818328.4
(22) Date of filing: 09.08.2011
(51) Int. Cl.: G06Q 30/00, G06F 17/30, H04W 4/02

(54) **METHOD FOR MANAGING ADVERTISEMENTS AND MOBILE COMMUNICATION TERMINAL FOR SAME**

(30) Priority: 16.08.2010 KR 20100078842
(71) Applicant: Lee, Jeonggab, Gangnam-gu, Seoul 135-775 (KR)
(72) Inventor: Lee, Jeonggab, Gangnam-gu, Seoul 135-775 (KR)
(74) Representative: Hutter, Jacobus Johannes
(86) International application number: PCT/KR2011/005809
(87) International publication number: WO 2012/023728

(57) **Abstract**

The present invention relates to a method for managing advertisements and a mobile communication terminal for the same, which uses the position information of the mobile communication to provide a searcher with a contest arrangement among multiple advertising items related to the searcher's current position, so as to arouse the searcher's interest, apply benefits to the searcher and the advertiser according to the contest ranking, and induce the searcher to make return visits and the advertiser to participate in bids.

A method for managing advertisements according to an embodiment of the present invention can include: receiving position information, by a position information module of a mobile communication terminal; receiving a particular search keyword as input from a searcher, by a receiving unit of the mobile communication terminal; providing the searcher with a contest space based on the position information so as to implement a contest among a plurality of advertising items related to the particular search keyword, by a contest space provider unit of the mobile communication terminal; determining contest rankings for the plurality of advertising items in consideration of a number of clicks, by a contest ranking determiner unit of the mobile communication terminal; providing a benefit in correspondence to the determined contest rankings, by a benefit provider unit of the mobile communication terminal; and providing the searcher with an advertisement of an advertiser sponsoring provision of the benefit, by an advertisement provider unit of the mobile communication terminal.

## Description

### [Technical Field]

The present invention relates to a method for managing advertisements and a mobile communication terminal for the same, which can maximize the advertising effect by providing the user with advertisements related to the current position of the mobile communication terminal.

### [Background Art]

Together with the rapid advances in communication networks such as the Internet, etc., it has become very common in recent times to search information through communication networks. That is, an Internet user can easily obtain any required information through the Internet at any time and at any place, and such information retrieval has led to an overall change in our everyday lives.

Accordingly, various models are being developed for methods of charging with regard to providing advertisements between a service provider who provides Internet users with a search service and an advertiser who achieves an advertising effect by providing the Internet users with information on his/her website through search results.

One example of a method of charging for provision of advertisements involves determining in advance the positions at which the information of advertisers are to be displayed on a search result screen, setting a sales value for each of the predetermined positions, and selling the positions to advertisers. In this method, the first advertiser to pay the sales value for a position that currently displays no information of an advertiser is given the right to display his/her information, and an advertiser who wishes to display his/her information at a particular position may have to wait until the contract for displaying the information of the previous advertiser expires.

To resolve the problem of the charging method above, a charging method based on a pay-per-click (PPC) method has been proposed. In the PPC method, the advertising cost may be determined by calculating the number of access connections (number of valid connections) between users and the advertiser as users who have made search requests click the in formation of a specific advertiser included in the search results. The advertisements of the respective advertisers may be provided to the users arranged in sequence within a particular area according to the order of the PPC amount (the amount charged per click) proposed by each advertiser.

According to this PPC charging method, since the information of the advertiser proposing the highest PPC amount is disposed with the highest priority within the particular area, advertisers may have to competitively propose high PPC amounts in order to display their information at relatively better positions. This may cause the advertising cost paid by each advertiser to increase continuously, possibly resulting in an increase in the number of advertisers who give up on the advertising.

Also, from the perspective of the user making a search request, when the disposition order or positions of advertisements in the particular area on a screen displaying search results are determined only by the competition among advertisers, for example, in order of request or in order of high to low PPC amount as described above, an advertisement unrelated to the requested search may be disposed at the highest position. This can make it seem that the accuracy of the search is low.

Thus, there is a need for an efficient advertising system which is helpful not only to the advertiser but also to the user and which can arouse the user's interest.

### [Disclosure]

### [Technical Problem]

An objective of the present invention is to provide a method for managing advertisements and a mobile communication terminal for the same, which uses the position information of the mobile communication to provide a searcher with a contest arrangement among multiple advertising items related to the searcher's current position, so as to arouse the searcher's interest, apply benefits to the searcher and the advertiser according to the contest ranking, and induce the searcher to make return visits and the advertiser to participate in bids.

### [Technical Solution]

One aspect of the present invention provides a method for managing advertisements that includes: receiving position information, by a position information module of a mobile communication terminal; receiving a particular search keyword as input from a searcher, by a receiving unit of the mobile communication terminal; providing the searcher with a contest space based on the position information so as to implement a contest among a plurality of advertising items related to the particular search keyword, by a contest space provider unit of the mobile communication terminal; determining contest rankings for the plurality of advertising items in consideration of a number of clicks, by a contest ranking determiner unit of the mobile communication terminal; providing a benefit in correspondence to the determined contest rankings, by a benefit provider unit of the mobile communication terminal; and providing the searcher with an advertisement of an advertiser sponsoring provision of the benefit, by an advertisement provider unit of the mobile communication terminal.

Another aspect of the present invention provides a mobile communication terminal comprising: a position information module configured to receive position information; a receiving unit configured to receive a particular search keyword as input from a searcher; a contest space provider unit configured to provide the searcher with a contest space based on the position information so as to implement a contest among a plurality of advertising items related to the particular search keyword; a contest ranking determiner unit configured to determine contest rankings for the plurality of advertising items in consideration of a number of clicks; a benefit provider unit configured to provide a benefit in correspondence to the determined contest rankings; an advertisement provider unit configured to provide the searcher with an advertisement of an advertiser sponsoring provision of the benefit; a database storing information related to the plurality of advertising items and information related to an advertisement of an advertiser; and a control unit configured to control the position information module, the receiving unit, the contest space provider unit, the contest ranking determiner unit, the benefit provider unit, the advertisement provider unit, and the database overall.

### [Advantageous Effects]

According to an embodiment of the present invention, a searcher can be provided with a convenient mode of searching, as a contest arrangement is provided to the searcher, for multiple advertising items that are located nearby and are associated with the search keyword, based on the position information of the mobile communication terminal.

Also, an embodiment of the present invention can apply certain benefits to the searcher and the advertiser based on the contest result, to induce the searcher to make return visits and induce the advertiser to participate in bids.

According to an embodiment of the invention, if an advertiser fraudulently clicks his/her own advertising item, the rate of the advertising fee may be increased, and if the advertiser fraudulently clicks another advertiser's advertising item, the contest ranking of the other advertiser's advertising item may rise, so that false clicks for the advertising items can be prevented and the searcher can be provided with contest rankings having high reliability and accuracy.

### [Description of Drawings]

FIG. 1 illustrates a mode of application of a method for managing advertisements related to an embodiment of the present invention.
FIG. 2 is a block diagram illustrating the composition of a mobile communication terminal related to an embodiment of the present invention.
FIG. 3 is a flowchart illustrating a method for managing advertisements related to an embodiment of the present invention.
FIG. 4 illustrates a mode of application of an embodiment of the present invention.

### [Mode for Invention]

The terms used in the present specification will be examined briefly, before presenting a detailed description of the present invention.

The terms used herein were selected as general terms currently in common usage, in consideration of the functions in the present invention, but their meanings may differ according to the intentions of those skilled in the art, or developments in court precedents or new technology, etc. In certain cases, the terms may have been arbitrarily chosen by the applicant, in which cases the meanings of the terms will be disclosed in the detailed description of the present invention. Thus, it is to be noted that the terms used herein are to be defined not only by the names of the terms but by their meanings and the overall context of the present invention.

Throughout this disclosure, an advertisement refers to a non-confronting paid communication performed to promote the sales of a product or service by introducing the existence, characteristics, and benefits of the product or service to many people and stimulating the desires or needs of consumers, or to increase the general reliability of an advertiser. The advertisement may include product advertising for selling a product, idea advertising for public relations (PR) aimed at promoting business policies, etc., and so on.

Throughout the disclosure, an advertiser refers to an entity conducting an advertising activity. When the advertiser performs advertising through a broadcast medium, the advertiser may include a program provider, i.e. a sponsor. Also, the advertiser may include a prospective client with whom an advertising agency wishes to begin a transaction. The advertiser may include multiple entities.

Throughout the disclosure, a battler refers to a person who wishes to display his/her advertising item in a contest space to compete with other advertising items.

A detailed description of certain embodiments of the present invention is provided below with reference to the accompanying drawings, to enable a person having ordinary skill in the relevant field of art to readily practice the invention. However, the present invention can be implemented in various different forms and is not limited to the embodiments described herein. In the drawings, portions that have no relevance to the descriptions are omitted in order that the present invention may be described more clearly, and throughout the specification, like reference numerals are applied to like elements.

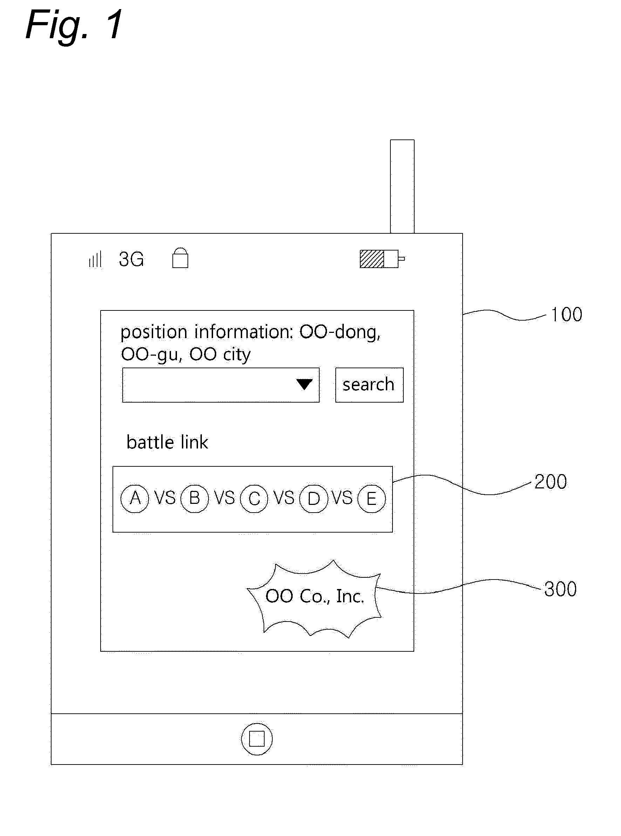

FIG. 1 illustrates a mode of application of a method for managing advertisements related to an embodiment of the present invention.

As illustrated in FIG. 1, according to an embodiment of the present invention, a searcher can access a particular website through a mobile communication terminal 100. The mobile communication terminal 100 may refer to a device that enables the searcher to perform a search over a communication network such as the Internet, etc.

The mobile communication terminal 100 can include a laptop (notebook) computer, cell phone, smart phone, digital broadcasting terminal, PDA (personal digital assistant), PMP (portable multimedia player), navigation device, e-book terminal, etc.

The searcher can access the website over a wireless communication network. In this case, the mobile communication terminal 100 can use a communication network (e.g. a 3G network or a 4G network) of a mobile communication service provider or WiFi

(wireless fidelity). Using the WiFi technology, the searcher can access the website for free.

The searcher is a concept that not only includes a person requesting a search through the website but also encompasses a person using the website, a person purchasing a product from the website or a site included as a link in the website, a person clicking an advertising item, and a person leaving a review in a linked site.

The searcher can be referred to as a clicker when clicking on a particular advertising item to open a link, and can be referred to as a purchaser when purchasing a product through the linked site.

The contest space 200 can display a multiple number of advertising items. The multiple advertising items can be displayed randomly (by rolling) within the contest space 200 whenever a new search keyword is inputted. This is to maintain parity between the multiple advertising items in the contest arrangements.

Also, according to an embodiment of the present invention, when the contest space 200 is provided to the searcher, a separate advertisement 300 can also be provided for displaying an advertisement of the advertiser that is providing benefits to the searchers and the battlers.

According to an embodiment of the present invention, the advertisement space 300 can exist separately from the contest space 200. According to another embodiment of the present invention, the advertisement space 300 can coexist with the contest space 200. For example, the contest space 200 can display the multiple advertising items for two minutes and display the advertiser's advertisement for one minute.

The advertisement space 300 can be provided in the form of an advertising banner. An advertising banner refers to a strip-shaped advertisement that can be seen on Internet sites. This is one of the newer forms of advertisements directed at Internet users, spurred by the rapid increase in the number of Internet users. The advertising banner can include link information. Thus, clicking on the advertising banner can lead the searcher to a related site.

According to an embodiment of the invention, when the searcher accesses the website, the mobile communication terminal 100 can provide the searcher with a search interface through the mobile web or a WAP (wireless application protocol).

The mobile web refers to a browsing technology that enables access to a wired website from a mobile terminal. A WAP (wireless application protocol) refers to a communication standard designed to enable a mobile terminal, such as a mobile communication device, a personal portable terminal (PDA), a wireless terminal, etc., to access the Internet.

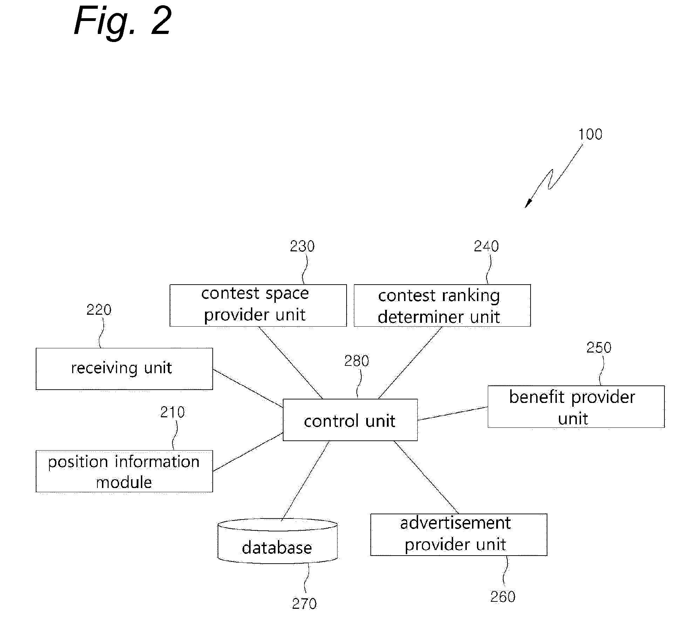

A more detailed description is provided below, with reference to FIG. 2, of the composition of the mobile communication terminal 100.

FIG. 2 is a block diagram illustrating the composition of a mobile communication terminal related to an embodiment of the present invention.

According to an embodiment of the present invention, the position information module 210, receiving unit 220, contest space provider unit 230, contest ranking determiner unit 240, benefit provider unit 250, advertisement provider unit 260, and database 270 of the mobile communication terminal 100 can be implemented on a single program cooperating with the control unit 280 or on a program that is separate from the control unit 280.

According to an embodiment of the present invention, the position information module 220 may be a module for verifying or obtaining the position of the mobile terminal. One such example is a GPS (global positioning system) module. A GPS module may receive position information from a multiple number of satellites. Here, the position information can include coordinate information represented by latitude and longitude. For example, the GPS module can measure the accurate time and distances from three or more satellites, applying triangulation on the three different distances to accurately calculate the current position. It is possible to use the method of obtaining distance and time information from three satellites and using one satellite to correct errors. In particular, the GPS module can obtain not only the position in terms of latitude, longitude, and altitude, but also 3-dimensional speed information and the accurate time, from the position information obtained from the satellites.

According to an embodiment of the present invention, the receiving unit 220 can receive a particular search keyword as input from the searcher.

According to an embodiment of the present invention, the contest space provider unit 230 can provide the searcher with the contest space 200 such that a contest is implemented among a multiple number of advertising items associated with the particular search keyword based on the position information.

In this case, according to an embodiment of the present invention, the contest space provider unit 230 can automatically adjust the size and position of the contest space 200. According to another embodiment of the present invention, it is also possible to allow the searcher to adjust the size and position of the contest space 200.

The multiple number of advertising items can be for specific products or services, or places of purveyance for the specific products or services. A place of purveyance can include an Internet shopping mall or an Open Market.

An Internet shopping mall refers to a virtual store existing in cyberspace. The Internet shopping mall provides the advantages that the operator pays very little in operating costs, is not limited by customer traffic, and is able to provide product information suited to the consumers' tastes.

An Open Market refers to a mediatory type Internet shopping mall deviating from the regular shopping mall model in that individuals and small businesses, etc., can freely trade products online. That is, the Open Market can involve multiple sales entities. The Open Market can omit the marketing margin, allowing sales at lower costs.

According to an embodiment of the present invention, the advertising items can be displayed in the contest space 200 in the form of text. Furthermore, the advertising items can also include simple advertising slogans, etc. Thus, the advertising items can achieve an advertising effect simply by impression through the contest space 200.

According to another embodiment of the present invention, the advertising items can be displayed in the form of images or video clips. In this case, the advertising items can better draw the attention of the searcher compared to the case of providing the advertising items as text only, for an increased advertising effect.

According to an embodiment of the present invention, the contest ranking determiner unit 240 can determine the contest rankings for the multiple number of advertising items. In this case, the contest ranking determiner unit 240 can determine the contest rankings in consideration of at least one of click-through rates, sales records, call numbers, and evaluations of the advertising items.

The click-through rate represents the ratio of the number of clicks to the number of times of impression for each of the advertising items. That is, the click-through rate can be defined as: "click-through rate = click number / impression".

The click may include the case of selecting the advertising item by an action of touching the advertising item on the mobile communication terminal 100.

The term "impression" refers to a particular advertising item being displayed to the searcher to allow clicking. According to an embodiment of the present invention, when the multiple advertising items are displayed in the contest space 200, they can be deemed to have been exposed. The recording of the occurrences of impression can be performed by a particular program.

Also, the term "click number" refers to the number of times a particular exposed advertising item was clicked. For example, if the searcher clicks on a particular advertising item, the mobile communication terminal 100 can maintain a 'click occurrence record' for the particular advertising item and 'information regarding the web page accessed via the click'. In this case, the mobile communication terminal 100 can record the click-related information through a particular program.

Thus, the contest ranking determiner unit 240 can identify whether or not there was a click, the click number, whether or not a linked site was accessed, and so on, through the click-related information.

Since the advertising item can include link information, if the searcher clicks on a particular advertising item, the searcher can be led to the website related to the advertising item, and the searcher can purchase a product or service at the linked website.

Thus, a searcher may select one of the advertising items presented in the contest space 200, open a link via the link information included in the selected advertising item, and access the linked website to purchase a product; and the sales record can mean the number of products or services purchased by the searchers.

According to an embodiment of the present invention, the evaluation of an advertising item can mean a value obtained based on points, number of recommendations, comments, product reviews, etc., given by searchers evaluating the advertising item.

According to an embodiment of the present invention, the advertising item can include certain telephone number information, and the contest ranking can be determined also by the searchers' actions of selecting the telephone number and making a call. According to an embodiment of the present invention, the number of times the telephone number is selected and a call is made can be defined as the call number.

According to an embodiment of the present invention, the advertising item can include position information. Thus, if the searcher clicks on a particular advertising item, the position information for the advertising item can be shown on a map.

According to an embodiment of the present invention, the benefit provider unit 250 can provide certain benefits to the battlers and the searchers in correspondence to the contest rankings determined above.

In the present specification, a benefit refers to a separate bonus that can be applied to the specific advertising item that is victorious in the contest among multiple advertising items. In this case, since the battlers can be provided with incentives according to the contest results, they can be encouraged to actively participate in the advertisement bids. Also, since the searchers can be provided with a particular benefit, they can be encouraged to revisit the website. Features related to the benefits will be described later in further detail.

The advertisement provider unit 260 can expose the advertiser's advertisement on the website in the form of an advertising banner in the advertisement space 300. The advertiser's advertisement can be expressed by at least one of text, images, and video clips.

Also, according to an embodiment of the present invention, the advertisement may include link information, so that if the searcher clicks on the advertising banner, the searcher can be led to a related site. It is possible to adjust the position of the advertising banner on the website.

According to an embodiment of the present invention, the advertiser's advertisement can be of a content associated with the search keyword. For example, if the search keyword is "smart phone", then the contest space 200 can display cell phone distributor A, cell phone distributor B, cell phone distributor C, cell phone distributor D, and cell phone distributor E, which are located near the region in which the mobile communication terminal 100 is currently positioned, while the advertisement space 300 can display an advertisement of a communication company that provides mobile communication services.

According to another embodiment of the present invention, the advertiser's advertisement can be unrelated to the search keyword, unlike the multiple number of advertising items. That is, the advertiser's advertisement can be generally displayed on the website regardless of what the search keyword is. Thus, the mobile communication terminal 100 can provide a maximum advertising effect for the advertiser.

According to an embodiment of the present invention, the advertiser can supply certain benefits to the searchers and the battlers according to the contest rankings, instead of the advertising fees.

According to an embodiment of the present invention, the database 270 can store information related to the advertising items displayed in the contest space 200, information related to the advertiser's advertisement displayed in the advertisement space 300, the contest ranking results determined by the contest ranking determiner unit 240, and the like. The information related to the advertising items and the advertiser's advertisement can include link information, product information, service information, information regarding the place of purveyance and the advertiser, and the like. The database 270 can also store information related to the benefits that are to be provided to the searchers and the battlers.

According to an embodiment of the present invention, the control unit 280 of the mobile communication terminal 100 can control the position information module 210, the receiving unit 220, the contest space provider unit 230, the contest ranking determiner unit 240, the benefit provider unit 250, the advertisement provider unit 260, and the database 270 overall.

Also, the control unit 280 can roll the multiple advertising items in the contest space 200 such that they are displayed at random. This may help guarantee parity in regard to contest ranking results for the multiple advertising items.

A more detailed description is provided below of a method for providing the advertiser with an efficient mode of advertising and for applying certain benefits according to the contest results, with respect to each component of the mobile communication terminal 100.

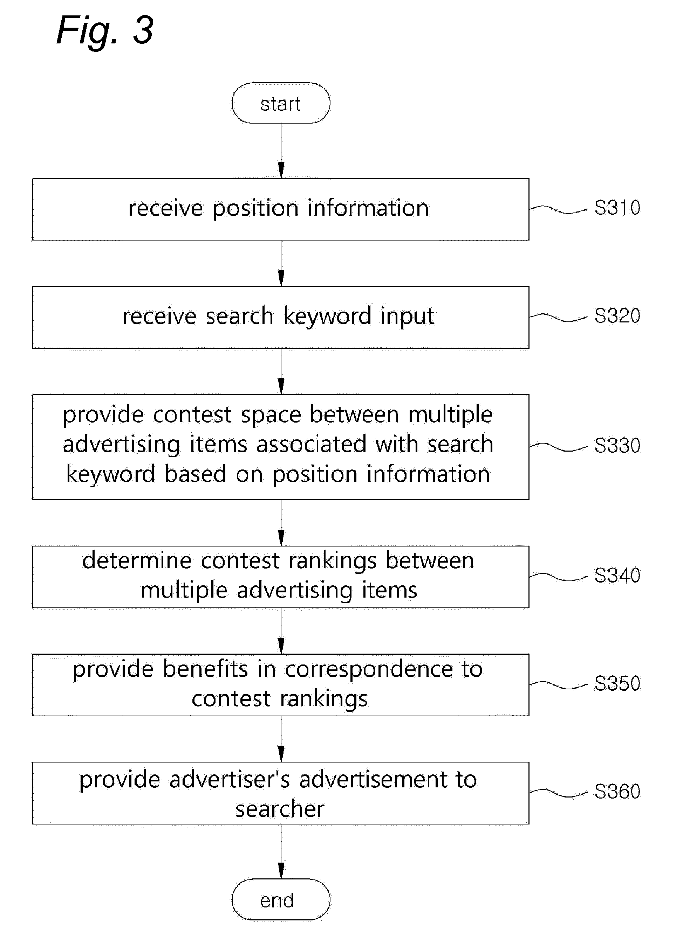

FIG. 3 is a flowchart illustrating a method for managing advertisements related to an embodiment of the present invention.

According to an embodiment of the present invention, the position information module 210 can receive position information from a satellite [S310]. According to an embodiment of the present invention, the position information module 210 can display the received position information in the form of text (e.g. Seocho-dong, Seocho-gu, Seoul). It is also possible to have the position information module 210 provide the position information in an image form on a map. The image can include not only 2D but also 3D pictures.

According to an embodiment of the present invention, the receiving unit 220 can receive a particular search keyword as input from the searcher [S320]. According to an embodiment of the present invention, the receiving unit 220 can also receive a search keyword from the searcher via a voice recognition function.

According to an embodiment of the present invention, the contest space provider unit 230 can provide the searcher with a contest space 200 such that a contest is implemented among a multiple number of advertising items associated with the selected search keyword based on the position information [S330].

For example, if the current position of the mobile communication terminal 100 is Seocho-dong, and the searcher inputs "bank" as the search keyword, then the contest space provider unit 230 can provide the contest space 200 such that a contest is implemented between several banks located in Seocho-dong.

In this case, the control unit 280 can extract a multiple number of advertising items associated with the search keyword based on the position information. The multiple advertising items can be extracted in consideration of bidding price and popularity.

The bidding price refers to the price proposed at the time of bidding by a battler who wishes to display his/her advertising item in the contest space 200.

The popularity parameter can be evaluated in consideration of the click-through rate, sales record, number of recommendations, product reviews, etc. The popularity parameter is used for extracting the advertising items that are to be displayed in the contest space 200 and is not related to determining the contest rankings of the advertising items.

Since the contest space 200 is a limited space, the control unit 280 may extract the advertising items in a number smaller than or equal to a preset number. For example, the control unit 280 can compare the bidding prices of a multiple number of advertising items associated with the search keyword and extract five advertising items having the highest bidding prices. Furthermore, the control unit 280 can also extract the top five items with 30% based on the bidding prices of the advertising items and 70% based on a popularity parameter. The control unit 280 can also extract the top five advertising items based solely on the popularity of the advertising items.

Having the control unit 280 extract the advertising items based only on the bidding prices might be beneficial to the company operating the mobile communication terminal 100, but there could be instances in which the searcher is unable to obtain the needed information.

Conversely, if the control unit 280 extracts the advertising items based only on popularity, the mobile communication terminal 100 can provide the searcher with customized advertisements. In this case, however, the battler who has paid a high bidding price to display his/her advertising item would be put at a disadvantage.

Thus, the control unit 280 can, according to circumstances, suitably consider the degrees of relevance to the search keyword, the bidding prices of the advertising items, and popularity parameters in extracting the advertising items that are to be displayed in the contest space 300.

According to an embodiment of the present invention, the control unit 280 can display the extracted advertising items in the contest space 300. The multiple number of advertising items can be displayed in various ways, such as in a vertical, horizontal, circular configuration, etc., within the contest space 200. For the sake of parity, the advertising items can be displayed randomly (by rolling) whenever a new search keyword is inputted.

Thus, according to an embodiment of the present invention, the same bidding prices may be charged for the multiple advertising items. For example, if the battlers wishing to display their advertising items in the contest space 200 have bid different amounts, the bidding price can be made uniform by fairly adjusting the bidding amounts to the highest bid, the lowest bid, or the average bid, etc., of the extracted multiple number of advertising items.

According to an embodiment of the present invention, the multiple advertising items can include products, services, places of purveyance, and the like. For example, suppose the search keyword received by the receiving unit 220 is "laptop". First, if the multiple items are products, then types of laptops such as laptop A, laptop B, laptop C, laptop D, laptop E, etc., can be extracted for the contest. Also, if the multiple items are services, then repair shop A, repair shop B, repair shop C, repair shop D, repair shop E, etc., can be extracted for the contest. If the multiple items are places of purveyance, then company A, company B, company C, company D, company E, etc., can be extracted for the contest. The places of purveyance can also include Open Markets.

The contest ranking determiner unit 240 can determine the contest rankings for the multiple number of advertising items [S340]. The contest rankings can be determined in consideration of at least one of sales records, click-through rates, call numbers, and evaluations of the advertising items.

For example, supposing the contest space 200 includes products A, B, C, D, and E, if the searcher clicks on product D to open a link, the contest ranking of product D can be moved higher. Also, if the searcher clicks on product D to open a link and concurrently purchases the product D at the linked site, the contest ranking for product D can be upwardly adjusted.

The contest ranking determiner unit 240 can determine the contest rankings for the advertising items in real time or for specific periods. For example, if the contest duration is set for 24 hours from a current time, the contest ranking determiner unit 240 can determine the contest rankings between the multiple advertising items at the points in time when the searchers make purchases. According to another embodiment, the contest ranking determiner unit 240 can determine the contest rankings for each week or each month.

The contest ranking determiner unit 240 can consider the click-through rates, call numbers, sales records, and evaluations of the advertising items to extract just one advertising item having the highest score as the victorious item, without determining the rankings for the other advertising items. The contest ranking determiner unit 240 can also calculate the scores for all of the multiple advertising items and determine the relative rankings of all of the items.

According to an embodiment of the present invention, the benefit provider unit 250 can provide benefits in correspondence to the contest rankings determined above

[S350]. The benefits can include discounts on the product and service, money accumulation, discount coupons, mileage accumulation, free gifts, gift certificates, game money, etc.

The benefits can be provided to searchers who open a link through the link information included in the item, access the linked website, and purchase a product or service.

According to an embodiment of the present invention, the benefit can also be provided to the battler who is victorious in the contest. In cases where a particular benefit is given to the battler, the benefit can include a discount on the bidding price, a reduced fee for product sales, an extension of advertising impression period, a priority in advertisements, etc. Also, the benefit provider unit 250 can provide an opportunity of impression for another advertising item of the battler who wins a contest.

Furthermore, the benefit provider unit 250 can provide a particular benefit to a searcher (clicker) who opened a link through the link information included in the item but did not make a purchase. For example, if the searcher selected (clicked) item A from the multiple number of items and opened a link, the benefit provider unit 250 can also provide the searcher with a benefit such as point or mileage accumulation, a discount coupon, etc., even if the user does not purchase item A. This is because accessing a linked site itself achieves the advertiser's purpose of advertising.

If the contest ranking determiner unit 240 determines the contest rankings for a specific period (e.g. a week or a month), the benefit provider unit 250 can provide the benefits to the purchasers or the battler related to the item that wins the contest.

Also, if the contest ranking determiner unit 240 determines the contest rankings whenever a purchase is made, the benefit provider unit 250 can provide the benefits to the searcher (purchaser) in real time at the time of purchase.

For example, suppose the contest is held for 24 hours only and there are 7 hours left at the current time. Suppose that, according to the results determined by the contest ranking determiner unit 240, the item in first place at the present time with 7 hours remaining is the item related to A. The searcher can access the website linked to item A to purchase item A, and since the item A is the product in first place at the time of purchase, the searcher can be provided with the associated benefit (e.g. a discount in the price of the product) in real time.

However, if the contest ranking determiner unit 240 is to determine the contest rankings when all 24 hours have passed, the purchaser at the time of purchase cannot know with certainty whether or not the purchaser will be eligible for the specific benefit, and therefore, a benefit can be provided when the contest duration is completed, such as in the form of point accumulation, etc.

According to an embodiment of the present invention, the benefit provider unit 250 can provide the benefit to the purchasers and the battler related to the one item that wins the contest, based on the contest result.

According to another embodiment, it is also possible to have the benefit provider unit 250 provide a different benefit for the purchasers or battler related to each item based on the rankings of the multiple items.

Furthermore, the benefit provider unit 250 can present various benefits to the searchers or battler related to the item that wins the contest, allowing the searchers or battler to select a specific benefit.

According to an embodiment of the present invention, a clicker who clicks on the advertiser's advertisement and a purchaser who purchases a product from the site linked by the link information included in the advertisement space 300 can be provided with greater benefits than those provided to the clicker and purchaser related to an advertising item in the contest space 200. Since the advertiser provides the searchers with the benefits for the purpose of advertising, the advertising effect can be increased by providing greater benefits to clickers and purchasers for the advertiser's advertisement.

According to an embodiment of the present invention, the advertisement provider unit 260 can provide the searcher with an advertisement of the advertiser sponsoring the provision of the benefit [S360]. The advertisement can be exposed in the form of an advertising banner on the website operated by the mobile communication terminal 100, to be provided to the searcher. The advertising banner can include link information to a related site. The searcher can click on the advertising banner to move to a website related to the advertisement.

FIG. 3 merely shows an example of the present invention, and a method for managing advertisements according to embodiments of the present invention may not necessarily be limited to the order illustrated above. In particular, the step in which the advertisement provider unit 260 provides the searcher with an advertisement of the advertiser sponsoring the provision of benefits [S360] can be present independently, irrespective of the other steps [S310 to S350].

According to an embodiment of the present invention, the benefit provider unit 250 can provide the benefits to the advertiser after a particular amount of time has passed since the beginning of the contest. This is because when only a small amount of time has passed since the beginning of the contest, the contest results can have high error and low reliability. Thus, the benefits can be provided to the advertiser after the contest has started and a particular amount of time has passed.

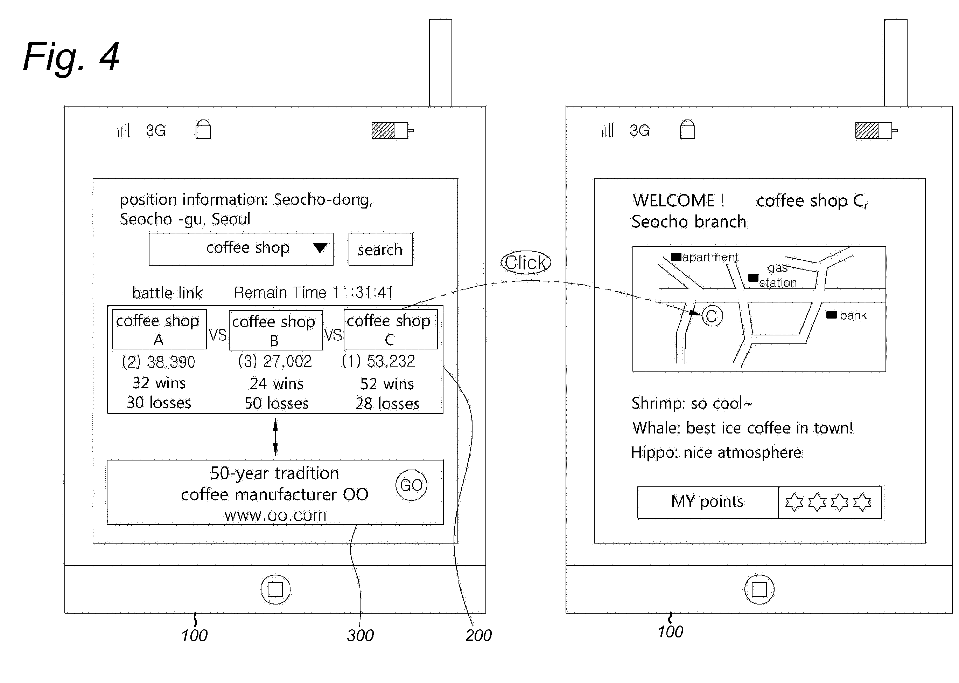

FIG. 4 illustrates a mode of application of an embodiment of the present invention.

As illustrated in FIG. 4, the position information module 210 can receive the current position information of the mobile communication terminal 100 from satellites. For example, suppose that the current position of the mobile communication terminal 100 is Seocho-dong, Seocho-gu in Seoul.

Also, the receiving unit 220 can be inputted with a search keyword from the searcher. If the searcher inputs "coffee shop" as the search keyword, the control unit 280 would extract a multiple number of advertising items related to coffee shops situated in Seocho-dong, Seocho-gu in Seoul, based on bidding prices and popularity. For example, coffee shop A Seocho branch, coffee shop B Seocho branch, and coffee shop C Seocho branch can be extracted and displayed in the contest space 200.

The mobile communication terminal 100 can provide the searcher with the contest duration through the website. If the contest is to be held during a specific time slot, the mobile communication terminal 100 can show the specific time slot on the website as well (e.g. 14:00 - 22:00, etc.).

Also, the mobile communication terminal 100 can provide the searcher with the contest ranking results for the multiple advertising items in real time in the contest space 200. The searcher can utilize this material as reference in using the advertisements.

However, it is also possible to provide the searcher with the ranking results after a particular amount of time has passed, instead of showing the rankings of the advertising items from the start. This can provide the searcher with search results of higher reliability.

In this case, however, the mobile communication terminal 100 can also provide the contest ranking results only to searchers who meet a certain set of conditions. This is because the information on contest rankings can be quality information for the searcher in using the search results. For example, the mobile communication terminal 100 can provide the contest ranking results only to searchers who have paid subscriptions. In this case, the mobile communication terminal 100 can induce the searcher to join a paid subscription and provide personal information for the searcher through the subscription information.

Also, according to an embodiment of the present invention, the mobile communication terminal 100 can provide the searcher with the prior records of each advertising item (e.g. 11 wins, 8 losses). The mobile communication terminal 100 can declare a KO victory if the click-through rate and sales record of a specific advertising item exceeds 50%.

The products shown in the contest space 200, such as laptop A through laptop E, can be displayed in the form of text, icons, video clips, etc. Also, the mobile communication terminal 100 can provide the searcher with brief promotional information regarding the service, etc. (for example, "with a White Christmas", "cafe with a cozy atmosphere", "Join our Summer Festival", etc.), for coffee shop A through coffee shop C.

According to an embodiment of the present invention, if the searcher selects and clicks on coffee shop C, a link can be opened, and the website to coffee shop C can be accessed. If the searcher accesses the website through the link and purchases a gift certificate for coffee shop C, then the contest ranking for coffee shop C can be made higher.

Suppose that the contest ranking determiner unit 240 determines the contest rankings in consideration of at least one of click-through rates, sales records, call numbers, and evaluations of advertising items, and the contest results are coffee shop C at first place, coffee shop A at second place, and coffee shop B at third place.

According to an embodiment of the present invention, the benefit provider unit 250 can provide benefits only to searchers related to coffee shop C, which won first place. According to another embodiment, the benefit provider unit 250 can apply different benefits also to searchers related to the other coffee shops in addition to the searchers related to coffee shop C that won first place.

For example, the benefit provider unit 250 can provide coupons valid for a 10% discount at coffee shop C to searchers who clicked on and opened a link for coffee shop C that won first place, provide coupons valid for one free ice coffee to searchers who clicked on coffee shop A that won second place, and provide raffle tickets to searchers who clicked on coffee shop B that won third place.

Also, according to an embodiment of the present invention, the benefit provider unit 250 can provide benefits also to searchers who leave a review at the linked website. Also, points and mileage can be provided for each searcher according to the number of accesses, and the searcher can be classified into different levels. Thus, an embodiment of the present invention can provide the effect of inducing searchers to make return visits.

The mobile communication terminal 100 can provide position information, such as a simple map, to the searcher who clicks on coffee shop C, based on the position information. Since the searcher can thus easily find a store nearby, an embodiment of the present invention can provide the searcher with a more convenient mode of searching.

According to an embodiment of the present invention, if the searcher visits coffee shop C using the position information and leaves a review of coffee shop C, the benefit provider unit 250 can provide the searcher who visited the coffee shop with a greater benefit compared to the searcher who only clicked on an item.

Furthermore, according to the contest results, the benefit provider unit 250 can provide certain benefits to the battler for coffee shop C who won first place such as by lower the bidding price, increasing advertisement impression duration, etc.

According to an embodiment of the present invention, the benefit provider unit 250 can provide benefits only to the battler who won first place, or also provide benefits to the other battlers with different benefits according to the contest rankings.

The benefits provided to the searchers and battlers may be sponsored by the advertiser. Thus, the advertiser's advertisement can be unrelated to the search keyword having a high average search rate, or the advertiser's advertisement can be associated with the search keyword for an advertising effect.

For example, if advertising items related to coffee shops are displayed in the contest space 200, a 50-year tradition coffee manufacturer ΔΔ can sponsor the benefits and have its advertisements exposed in the advertisement space 300, as a company associated with coffee, albeit not a coffee shop per se. Moreover, a spaghetti restaurant having no relation to a coffee shop can be an advertiser sponsoring the benefits, in which case an advertisement related to spaghetti and unrelated to a coffee shop can be exposed in the advertisement space 300.

The advertisement space 300 can exist separately from the contest space 200, or the advertisement space 300 and the contest space 200 can be displayed alternatingly at the same position. For example, coffee shops A to C can be displayed for one minute, and then a 50-year tradition coffee manufacturer ΔΔ can be displayed for 40 seconds.

The searcher can also access a website related to the advertiser's advertisement according to the link information included in the advertiser's advertisement. In this case, the benefit provider unit 250 can provide benefits to searchers who clicked on the advertiser's advertising banner or purchasers who opened a link on the advertising banner and purchased products at the linked site.

The embodiments of the present invention described above are not necessarily limited to systems and methods as means of implementation, and can be implemented as application programs that perform functions corresponding to the components of the embodiments of the present invention or recorded mediums having such programs recorded thereon. The person skilled in the art to which the present invention pertains would easily provide such implementations based on the disclosures of the embodiments described above.

Moreover, while the descriptions above relate to certain embodiments of the present invention, the scope of the present invention is not limited to the embodiments but rather encompasses numerous variations and improvements obtained by the skilled person using the basic concepts of the present invention defined by the following scope of claims.

## Claims

1. A method for managing advertisements, the method comprising:
receiving position information, by a position information module of a mobile communication terminal;
receiving a particular search keyword as input from a searcher, by a receiving unit of the mobile communication terminal;
providing the searcher with a contest space based on the position information so as to implement a contest among a plurality of advertising items related to the particular search keyword, by a contest space provider unit of the mobile communication terminal;
determining contest rankings for the plurality of advertising items in consideration of a number of clicks, by a contest ranking determiner unit of the mobile communication terminal;
providing a benefit in correspondence to the determined contest rankings, by a benefit provider unit of the mobile communication terminal; and
providing the searcher with an advertisement of an advertiser sponsoring provision of the benefit, by an advertisement provider unit of the mobile communication terminal.

2. The method of claim 1, wherein the plurality of advertising items are extracted by a control unit of the mobile communication terminal based on at least one of a bidding price and a popularity parameter.

3. The method of claim 1, wherein the benefit is provided by the benefit provider unit to a searcher who clicked at least one of the plurality of advertising items.

4. The method of claim 1, wherein the determining of the contest rankings comprises:
determining the contest rankings for the plurality of advertising items in consideration of at least one of a click-through rate, a sales record, a call number, and an evaluation of the advertising items, by the contest ranking determiner unit.

5. A mobile communication terminal comprising:
a position information module configured to receive position information;
a receiving unit configured to receive a particular search keyword as input from a searcher;
a contest space provider unit configured to provide the searcher with a contest space based on the position information so as to implement a contest among a plurality of advertising items related to the particular search keyword;
a contest ranking determiner unit configured to determine contest rankings for the plurality of advertising items in consideration of a number of clicks;
a benefit provider unit configured to provide a benefit in correspondence to the determined contest rankings;
an advertisement provider unit configured to provide the searcher with an advertisement of an advertiser sponsoring provision of the benefit;
a database storing information related to the plurality of advertising items and information related to an advertisement of an advertiser; and
a control unit configured to control the position information module, the receiving unit, the contest space provider unit, the contest ranking determiner unit, the benefit provider unit, the advertisement provider unit, and the database overall.

6. The mobile communication terminal of claim 5, wherein the control unit extracts the plurality of advertising items based on at least one of a bidding price and a popularity parameter.

7. The mobile communication terminal of claim 5, wherein the benefit provider unit provides the benefit to a searcher who clicked at least one of the plurality of advertising items.

8. The mobile communication terminal of claim 5, wherein the contest ranking determiner unit determines the contest rankings for the plurality of advertising items in consideration of at least one of a click-through rate, a sales record, a call number, and an evaluation of the advertising items.
